# EUROPÄISCHE PATENTSCHRIFT

(11) **EP 0 911 125 B1**
(45) Veröffentlichungstag und Bekanntmachung des Hinweises auf die Patenterteilung: **04.06.2003**
(21) Anmeldenummer: 98118602.6
(22) Anmeldetag: 01.10.1998
(51) Int. Cl.: B26D 1/62, B23D 25/12

(54) **Hochgeschwindigkeitsschere zum Querteilen von Walzband**
High speed cutter for rolled web
Dispositif de coupe à grande vitesse pour des bandes laminées

(30) Priorität: 22.10.1997 DE 19746528
(43) Veröffentlichungstag der Anmeldung: 28.04.1999
(73) Patentinhaber: SMS Demag AG, 40237 Düsseldorf (DE)
(72) Erfinder: Kneppe, Günter Dr., 57271 Hilchenbach (DE); Münker, Jochen Dr., 57223 Kreuztal (DE); Merz, Jürgen, 57223 Kreuztal (DE); Grafe, Horst, 57271 Hilchenbach (DE)
(74) Vertreter: Valentin, Ekkehard, Dipl.-Ing.

(56) Entgegenhaltungen:
- EP-A- 0 016 615
- EP-A- 0 576 005
- EP-A- 0 783 940
- CH-A- 123 745
- DE-A- 1 436 506
- DE-U- 9 204 602
- FR-A- 762 587
- US-A- 4 742 741

## Beschreibung

Die Erfindung betrifft eine Hochgeschwindigkeitsschere zum Querteilen von Walzband mit einem wenigstens auf einer von zwei einander gegenüberstehenden Trommeln angeordneten Messer, insbesondere Meißelmesser mit Messerschneidkante, das auf Vorschubgeschwindigkeit des zu schneidenden Walzbandes beschleunigbar ist und die Trommeln zur Durchführung eines Schnittes gegeneinander anstellbar sein können, wobei die Trommeln durch wenigstens eine ihnen zugeordnete Antriebsvorrichtung auf eine der Geschwindigkeit des zu schneidenden Walzbandes entsprechende Umfangsgeschwindigkeit beschleunigbar sind und mindestens einer der Trommeln eine separat ansteuerbare Anstellvorrichtung zugeordnet ist

Bei der Herstellung von Warmbreitband wird immer mehr dazu übergegangen, endlos zu walzen. Das Einsatzmaterial wird durch Verschweißen von Vorbändem oder in Gießmaschinen erzeugt. Warmbreitband wird aber auch im Zuge eines Semiendloswalzverfahrens erstellt, bei dem das Einsatzmaterial mehrfache Vorbandlängen aufweisen kann, die auf Rollgängen, Rollenherdöfen oder in Coilboxen zwischengelagert sein können.

Das Fertigband muss nach dem Walzvorgang auf die den geforderten Coilgewichten entsprechenden Bandlängen geschnitten werden. Der Schnitt soll im Kontibetrieb, d. h. bei Walzgeschwindigkeit erfolgen. Er muss daher bei heute üblichen Geschwindigkeiten von Warmbreitbandstraßen im Bereich von 5 m/s bis zu 30 m/s vorzugsweise 10 m/s bis 20 m/s erfolgen. Die Banddicken liegen dabei zwischen 0,5 mm bis 30 mm vorzugsweise zwischen 0,6 mm bis 1,5 mm.

Bekannte Trommel- bzw. Kurbelscheren, die zum Schneiden von Warmbreitband dienen, sind nicht für derartig hohe Bandgeschwindigkeiten ausgelegt. Aber auch fliegende Scheren, die im Anschluss an Kaltwalz-Tandemstraßen eingesetzt werden, arbeiten heute üblicherweise nur bis zu Bandgeschwindigkeiten von ca. 6 m/s; auch hier besteht die Forderung nach erheblich größerer Geschwindigkeit.

Bekannte Schneidverfahren, bei denen die Messertrommel für den Schnitt auf Bandgeschwindigkeit von bis zu 30 m/s beschleunigt und anschließend wieder abgebremst werden müssen, lassen sich bei derart hohen Bandgeschwindigkeiten nicht mehr mit vertretbarem Aufwand realisieren.

Zur Abhilfe wurde bereits vorgeschlagen, dass die Beschleunigung der Messertrommel auf Bandgeschwindigkeit bzw. das Betreiben der Messertrommel mit Bandgeschwindigkeit getrennt von der senkrecht zum Band erfolgten Bewegung steuerbar sind, und dass hierfür wenigstens eine der Trommeln eine separat ansteuerbare Anstellvorrichtung zugeordnet ist.

Dabei kann dann einer der Trommeln ein Messer, und der anderen Trommel ein mit dem Messer zusammenwirkender Amboss bzw. ein als Amboss wirkender Mantelbereich zugeordnet sein.

Bei dieser Ausbildung der Schere ist jedoch ein sicherer und exakter Trennschnitt des Bandes nur dann gewährleistet, wenn der Schnittspalt zwischen Messerschneidkante und Amboss bzw. Mantelbereich der Gegentrommel Null ist. Andernfalls - z. B. bei Überlänge des Messers - können Messer und Amboss bis zur Zerstörung überlastet werden, und bei der Unterlänge des Messers bleibt der Trennschnitt unvollständig.

Die Einstellung eines Schnittspaltes mit "Null" ist jedoch aufgrund eines oder mehrerer zusammenwirkender Einflussgrößen von Wärmedehnung, Verschleiß, elastischem Verhalten der Anstellvorrichtung, Beschleunigungskräften, Fertigungstoleranzen etc. nicht oder nicht mit der nötigen Sicherheit zu erreichen. Es ist daher erforderlich, das Messer zwecks wirklich zuverlässiger Trennung des Bandes aus dem Schnittkreis überstehen zu lassen.

Dieser Überstand bewirkt jedoch eine rapide Steigerung der Schnittkräfte und damit der Verschleißerscheinungen an sämtlichen Bauteilen der Schneidelemente, der Anstellvorrichtung bis hin zu den Lagerungen der Trommeln.

Das Dokument G 92 04 602.9 (U1 ) schlägt ebenso wie die darin genannte Patentschrift US-A 23 41 503 zur Abhilfe dieser Schwierigkeiten und Nachteile eine Ausbildung der Schere mit einem Meißelmesser der Messertrommel vor, das aus dem Schnittkreis gegenüber einem als Amboss wirkenden Mantelbereich der Trommel vorstehend und gegen mindestens ein Federelement mit vorbestimmbarer Rückstelikraft nachgiebig abstützbar gelagert ist, wobei die Aufnahme und Befestigung eines nachgiebig angeordneten Messers parallel zur Drehachse eines Messerzylinders mit einer an dessen Umfang gelegenen und in diesen eingearbeiteten Nut und mit über die Länge jedes Messers verteilt angeordneten Druckpunkten ausgebildet ist.

Von Nachteil bei dieser Bauart ist der erhebliche fertigungstechnische Aufwand beim Einbau der elastischen Baugruppen in den Innenraum der Messertrommel. Dies führt bei einer Störung oder im Falle einer erforderlichen Revision zu erheblichen Stillstandszeiten der Messerstation mit Produktionsausfall, welche die Betriebskosten und das Ausbringen der gesamten Anlage stark belasten.

Die Dokumente EP-A-0 576 005 sowie EP-A 0 016 615 betreffen eine gattungsfremde Schredderschere bzw. einen Schneidkopf für Zigarettenpapier bzw. Zigaretten mit Filtern.

Der vorliegenden Erfindung liegt, ausgehend vom vorgenannten Stand der Technik, die Aufgabe zugrunde, eine Hochgeschwindigkeitsschere der im Oberbegriff von Anspruch 1 genannten Bauart zum Schneiden von Warm- und Kaltband unter Vermeidung der angesprochenen Schwierigkeiten und technischen Grenzen so weiterzubilden, dass exakte Schnitte bei Bandgeschwindigkeiten bis zu 30 m/s auch bei minimalen Banddicken sicher erreicht werden, und zwar insbesondere ohne Überlastung von Messer, Amboss bzw. Mantelbereich der Gegentrommel sowie des Anstellmechanismus und der Trommellagerungen, und/oder von unvollkommener Schnittausführung.

Zur Lösung der Aufgabe wird bei einer Hochgeschwindigkeitsschere der im Oberbegriff von Anspruch 1 gekennzeichneten Art mit der Erfindung vorgeschlagen, dass das Meißelmesser der Messertrommel aus dem Schnittkreis gegenüber dem Amboss bzw. dem als Amboss wirkenden Mantelbereich der Trommel vorstehend und gegen mindestens ein Federelement mit vorbestimmbarer Rückstellkraft nachgiebig abstützbar gelagert ist; das Meißelmesser in der Messertrommel unnachgiebig eingespannt ist und die Messertrommel mit ihrer Lagerung aufnehmende Anstellvorrichtung gegen das Federelement mit vorbestimmbarer Rückstellkraft nachgiebig abstützbar gelagert ist und dass die Anstellvorrichtung mit durch Anstellexzenter betätigbaren Schwingen ausgebildet ist, wobei die Messertrommel mit ihrer die Lagerung aufnehmenden Schwinge der Anstellvorrichtung gegen ein Federbein mit vorbestimmbarer Rückstellkraft nachgiebig abstützbar gelagert ist.

Mit der Lösung nach der Erfindung wird das vorteilhafte Ergebnis erzielt, dass nämlich das zunächst aus dem Schnittkreis überstehende Messer im Schneidvorgang beim Auftreffen auf den Amboss oder den als Amboss wirkenden Mantelbereich der zweiten Trommel so weit nachgeben kann, dass eine unzulässige Steigerung der Schnittkräfte und damit Verschleißerscheinungen an allen Bauteilen der Schneidelemente bzw. der Anstelivorrichtung bis hin zu den Lagern der Trommel sicher vermieden wird.

Eine Ausgestaltung der Erfindung sieht vor, daß eine der Trommeln mit einem Meißelmesser und die andere Trommel mit einem mit dem Messer zusammenwirkenden Amboss ausgestattet ist Es kann aber auch alternativ von der Maßnahme Gebrauch gemacht sein, daß eine der Trommeln mit einem Meißelmesser ausgestattet ist, welches mit einem als Amboss wirkendem Mantelbereich der zweiten Trommel zusammenwirkt.

Insgesamt wird mit der Erfindung erreicht, daß das Meißelmesser beim Rotieren der Trommel auf das Band trifft, dieses durchtrennt und sich dann auf dem Amboss bzw. dem als Amboss wirkenden Mantelbereich der Gegentrommel abstützt und anschließend ausweicht bzw. einfedert.

Beim Zusammenwirken zwischen Meißelmesser und Ambosstrommel ergibt sich der Vorteil, daß die Synchronisation der Umfangsgeschwindigkeiten beider Trommeln nicht besonders genau zu sein braucht Im Gegenteil: Bei einer Differenz der Umfangsgeschwindigkeiten zwischen Meißelmesser und Ambossrommel kann der gesamte Umfang der Ambosstrommel im Zusammenwirken mit dem Messer genutzt werden, wodurch eine Verschleißverteilung erreicht wird und die Verfügbarkeit der Schere günstig verbessert wird.

Infolgedessen ist das vorbeschriebene Prinzip besondert gut für den rauhen Betrieb in Warmwalzwerken für höchste Bandgeschwindigkeiten geeignet

Weitere Ausgestaltungen der Erfindung sind entsprechend den Unteransprüchen vorgesehen.

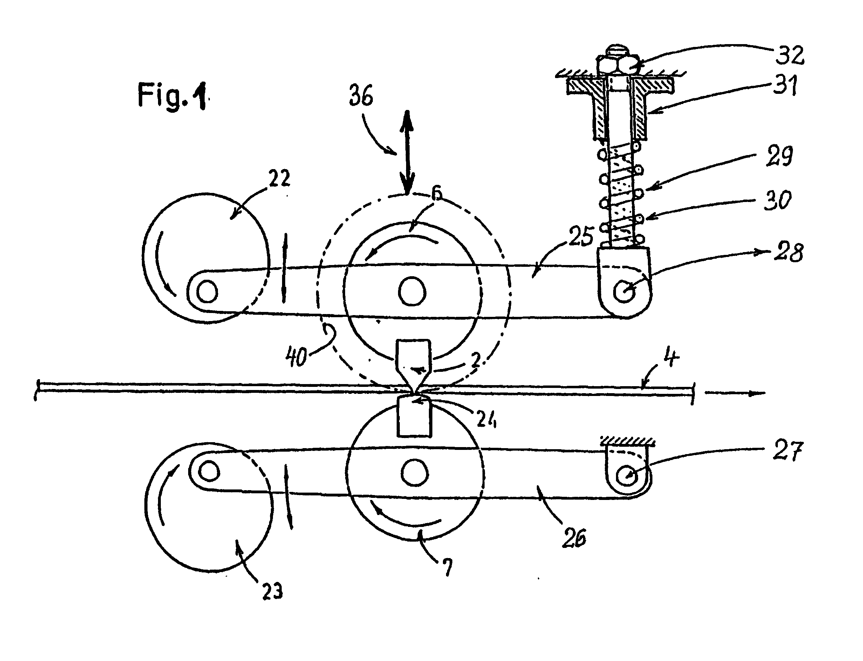

Einzelheiten, Merkmale und Vorteile der Erfindung ergeben sich aus der nachstehenden Erläuterung eines in der Zeichnung schematisch dargestellten Ausführungsbeispieles. Die Figur 1 zeigt:
den Gegenstand der Erfindung in Form einer Anstellvorrichtung für Meißelmesser und Ambosstrommel mit federnder Abstützung eines Anstellbalkens in Seitenansicht.

Die Figur zeigt eine fliegende Hochgeschwindigkeitsschere mit einer Messertrommel 6 und einer mit dieser zum Zerteilen eines Walzbandes 4 zusammenwirkenden Ambosstrommel 7. Die beiden Trommeln 6, 7 sind mit einer nicht gezeigten Antriebsvorrichtung auf Vorschubgeschwindigkeit des zu schneidenden Walzbandes 4 beschleunigbar und zur Durchführung eines Schnittes gegeneinander mit einer Anstelivorrichtung 36 einstellbar. Durch eine derartige Anstellvorrichtung werden die beiden Trommeln 6, 7 unabhängig vom Anstellvorgang zwecks Durchführung eines Schnittes auf eine Umfangsgeschwindigkeit gebracht, die der Vorschubgeschwindigkeit des zu schneidenden Bandes 4 entspricht, und während der weiteren Betriebsdauer auf dieser Umfangsgeschwindigkeit gehalten, während die Anstellung zum Schnitt unmittelbar nach durchgeführtem Schnitt wieder auf eine geöffnete Neutralstellung zurückgeführt wird, um eine vorgegebene Band-Abschnittslänge unzerteilt durch die Schere passieren zu lassen.

Nach der Erfindung ist vorgesehen, dass das Meißelmesser 2 der Messertrommel 6 aus dem Schnittkreis 40 gegenüber einem Amboss 24 bzw. dem als Amboss wirkenden Mantelbereich der Trommel 7 vorstehend gegen eine Anstellvorrichtung 36 mit vorbestimmbarer Rückstellkraft nachgiebig abstützbar gelagert ist. Dabei ist das Meißelmesser 2 in der Messertrommel 6 unnachgiebig eingespannt.

Damit ist dann das Meißelmesser in seiner vorstehenden Schnittposition mit vorbestimmter Rückstellkraft nachgiebig abgestützt. Auf diese Weise kann das Meißelmesser 2 bspw. soweit gegen die Federkraft nachgiebig in Richtung des Trommelzentrums beim Schnittvorgang nach Durchtrennen des Walzbandes 4 zurückgedrängt werden, dass eine Beschädigung der Messerschneidkante 3 bzw. des Mantelbereiches der Ambosstrommel 7 vermieden wird. Im Übrigen kann die Ambosstrommel 7 aus relativ weichem Material sein, um das Meißelmesser 1 zu schonen.

In der Figur 1 ist eine Anstellvorrichtung 36 mit durch Anstellexzenter 22, 23 betätigbaren Schwingen 25, 26 gezeigt. Die umfasst eine Ausführung der Erfindung, wobei das Meißelmesser 2 in der Messertrommel 6 unnachgiebig eingespannt ist, und die Messertrommel 6 mit ihrer Lagerung aufnehmende Anstellvorrichtung 36 gegen ein Federbein 29 mit vorbestimmbarer Rückstellkraft nachgiebig abstützbar gelagert ist.

Bei dieser Ausführung kann das Messer 2 aus dem Schnittkreis 40 gegen den Amboss 24 bei Erreichen einer vorgegebenen Belastungsspitze federnd nachgehen, wobei dann die Schwinge 25 um ein entsprechendes Maß gegen die Kraft der Feder 30 angehoben wird, um eine Überlastung von Messer 2, Amboss 24 und aller übrigen Bauteile einschließlich der Lagerung der Trommeln 6 und 7 zu vermeiden.

Figur 1 zeigt eine bevorzugte Ausführung der Erfindung, rein schematisch dargestellt. Dabei besitzt die Messertrommel 6 ein unnachgiebig eingespanntes Meißelmesser 2, das im Zusammenwirken mit dem Amboss 24 der Ambosstrommel 7 das Walzband 4 bei entsprechender Anstellung der Anstellvorrichtung 36 durch einen Trennschnitt zerteilt. Weil die Anstellexzenter 22, 23, der Anstellvorrichtung 36 einen unveränderbaren Exzenterweg beschreiben, würde zum Erreichen eines Schnittsspaltes der Größe Null ein Überstand Ü des Meißelmessers 2 relativ zum Amboss 24 erforderlich sein. Dies würde unweigerlich zu einem spontanen Anstieg der Krafteinwirkung zwischen Messerschneidkante 3 und Amboss 24 und somit der gesamten Anstellvorrichtung 36 einschließlich der Lagerungen der Exzenter, der Trommeln und der Gelenke 27, 28 an den Schwingen 25, 26 führen. Um hier nach der Lehre der Erfindung die Überlastung aller Bauelemente durch Abstützung des Meißelmessers gegen ein Federelement mit vorbestimmbarer Rückstellkraft zu vermeiden, ist bspw. die Schwinge 25 mit ihrem Gelenk 28 federnd gegen die beispielhaft gezeigte Spiralfeder 30 abgestützt. Dabei übernimmt das Federbein 29 eine lineare Führung in dem Führungselement 31, und das Federbein 29 ist in seiner Bewegung nach unten durch die Stellschraube 32 begrenzbar.

Die Erfindung verbessert in optimaler Weise eine Hochgeschwindigkeitsschere unter Erzielung von sauberen Trennschnitten ohne Überlastung der Bauteile der Schere insbesondere bei Transportgeschwindigkeiten des zu schneidenden Walzbandes von bis zu 30 m/s.

### Bezugszeichenliste

- 1: Meißelmesser federnd gelagert
- 1': Meißelmessersegment
- 2: Meißelmesser fest eingespannt
- 3: Messerschneidkante
- 4: Walzband
- 6: Messertrommel
- 7: Ambosstrommel
- 8: Verschlusselement
- 9: Radialführung
- 10: Flansch
- 11: Schaft, Messerschaft
- 12: Stahlfederpaket
- 12': Tellerfederpaket
- 12": segmentartige Federelemente
- 13: Kolben
- 14: Zylinder
- 15: Druckplatte
- 16: Druckstange
- 17: Verschraubung
- 18: Druckspeicher
- 19: Verschlussarmatur
- 20: Schraube
- 21: Gasdruckfeder
- 22: Anstellexzenter
- 23: Anstellexzenter
- 24: Amboss
- 25: Schwinge
- 26: Schwinge
- 27: Gelenk
- 28: federbar abgestütztes Gelenk
- 29: Federbei
- 30: Federelement, Spiralfeder
- 31: Führungselement
- 32: Stellschraube
- 33: Verstellmechanismus
- 34: Verstellweg
- 35: hydraulische Flüssigkeitssäule
- 36: Anstellvorrichtung
- 37: Loslager
- 38: Loslager
- 40: Schnittkreis

## Patentansprüche

1. Hochgeschwindigkeitsschere zum Querteilen von Walzband mit einem wenigstens auf einer von zwei einander gegenüberstehenden Trommeln (6, 7) angeordneten Messer, insbesondere Meißelmesser (1, 2) mit Messerschneidkante (3), das auf Vorschubgeschwindigkeit des zu schneidenden Walzbandes (4) beschleunigbar ist und die Trommeln (6, 7) zur Durchführung eines Schnittes gegeneinander anstellbar sein können, wobei die Trommeln durch wenigstens eine ihnen zugeordnete Antriebsvorrichtung auf eine der Geschwindigkeit des zu schneidenden Walzbandes (4) entsprechende Umfangsgeschwindigkeit beschleunigbar sind und mindestens einer der Trommeln (6, 7) eine separat ansteuerbare Anstelivorrichtung (36) zugeordnet ist,
**dadurch gekennzeichnet,**
**dass** das Meißelmesser (1) in der Messertrommel (6) aus dem Schnittkreis (40) gegenüber dem Amboss bzw. dem als Amboss wirkenden Mantelbereich der Trommel (7) vorstehend und gegen mindestens ein Federelement (29, 30) mit vorbestimmbarer Rückstellkraft nachgiebig abstützbar gelagert ist; das Meißelmesser (1) in der Messertrommel unnachgiebig eingespannt ist und die die Messertrommel mit ihrer Lagerung aufnehmende Anstellvorrichtung (36) gegen das Federelement (29, 30) mit vorbestimmbarer Rückstellkraft nachgiebig abstützbar gelagert ist,
**dass** die Anstellvorrichtung (36) mit durch Anstellexzenter (22, 23) betätigbaren Schwingen (25, 26) ausgebildet ist, wobei die Messertrommel (6) mit ihrer die Lagerung aufnehmenden Schwinge (25) der Anstellvorrichtung (36) gegen ein Federbein (29) mit vorbestimmbarer Rückstellkraft nachgiebig abstützbar gelagert ist.

2. Schere nach Anspruch 1,
**dadurch gekennzeichnet,**
**dass** eine der Messertrommeln (6) mit einem Meißelmesser (2) und die andere Trommel (7) mit einem mit dem Meißelmesser (2) zusammenwirkenden Amboss (24) ausgestattet ist.

3. Schere nach Anspruch 1 oder 2,
**dadurch gekennzeichnet,**
**dass** eine der Trommeln (6) mit einem Meißelmesser (2) ausgestattet ist, das mit einem als Amboss wirkenden Mantelbereich der zweiten Trommel (7) zusammenwirkt.

4. Schere nach einem oder mehreren der Ansprüche 1 bis 3,
**dadurch gekennzeichnet,**
**dass** die Trommeln (6, 7) zur Einhaltung eines definierten Schneidspaltes zwischen Meißelmesser (2) und Amboss (24) mit ihren Umfangsgeschwindigkeiten miteinander sowie mit der Bandvorschubgeschwindigkeit synchronisierbar sind.

5. Schere nach einem oder mehreren der Ansprüche 1 bis 4,
**dadurch gekennzeichnet,**
**dass** die Anstellvorrichtungen (22, 23, 36) mit der Rotation der Trommeln (6, 7) derart synchronisierbar bzw. steuerbar sind, dass beim Durchlauf von Messer (2) und/oder Amboss (24) die Anstellbewegungen beendet sind und nach Durchlauf rückgeführt werden.

6. Schere nach den Ansprüchen 4 oder 5,
**dadurch gekennzeichnet,**
**dass** die Synchronisierung elektrisch bzw. elektronisch erfolgt.

7. Schere nach den Ansprüchen 4 oder 5,
**dadurch gekennzeichnet,**
**dass** die Synchronisierung getriebetechnisch erfolgt.

## Claims

1. High-speed cutter for transverse cutting of rolled strip, with a knife arranged on at least one of two mutually opposite drums (6, 7), particularly a chisel knife (1, 2), with a knife cutting edge (3), which can be accelerated to the speed of advance of the rolled strip (4) to be cut and the drums (6, 7) can be settable one against the other for execution of a cut, wherein the drums can be accelerated by at least one drive device associated therewith to a circumferential speed corresponding with the speed of the rolled strip (4) to be cut and at least one of the drums (6, 7) is associated with a separately controllable setting device (36), **characterised in that** the chisel knife (1) in the knife drum (6) protrudes from the cutting circle (40) relative to the anvil or to the circumferential surface of the drum (7) acting as an anvil and is mounted to be supportable in yielding manner against at least one spring element (29, 30) by a predeterminable restoring force, the chisel knife (1) is clamped in non-yielding manner in the knife drum and the setting device (36), which receives the knife drum by the mounting thereof, is mounted to be supportable in yielding manner against the spring element (29, 30) with predeterminable restoring force, that the setting device (36) is constructed with rockers (25, 26) actuable by setting eccentrics (22, 23), wherein the knife drum (6) together with its rocker (25), which receives the mounting, of the setting device (36) is mounted to be supportable in yielding manner with predeterminable restoring force against a spring leg (29).

2. Cutter according to claim 1, **characterised in that** one of the knife drums (6) is equipped with a chisel knife (2) and the other drum (7) with an anvil (24) co-operating with the chisel knife (2).

3. Cutter according to claim 1 or 2, **characterised in that** one of the drums (6) is equipped with a chisel knife (2), which co-operates with a circumferential surface, which acts as an anvil, of the second drum (7).

4. Cutter according to one or more of claims 1 to 3, **characterised in that** the drums (6, 7) can be synchronised by their circumferential speeds with one another as well as with the strip advance speed for maintenance of a defined cutting gap between chisel knife (2) and anvil (24).

5. Cutter according to one or more of claims 1 to 4, **characterised in that** the setting devices (22, 23, 36) can be synchronised or controlled with the rotation of the drums (6, 7) in such a manner that on transit of the knife (2) and/or anvil (24) the setting movements are concluded and are led back after transit.

6. Cutter according to claim 4 or 5, **characterised in that** the synchronisation is carried out electrically or electronically.

7. Cutter according to claim 4 or 5, **characterised in that** the synchronisation is carried out in terms of gearing.

## Revendications

1. Ciseau à grande vitesse pour sectionner une bande laminée avec un couteau disposé au moins sur l'un de deux tambours (6, 7) se faisant face mutuellement, en particulier une lame de burin (1, 2) avec un bord tranchant de lame (3), qui peut être accélérée à la vitesse d'avance de la bande laminée (4) à couper et les tambours (6, 7) peuvent être réglés l'un par rapport à l'autre pour réaliser une coupe, les tambours pouvant être accélérés à une vitesse périphérique correspondant à la vitesse de la bande laminée (4) à couper à l'aide d'au moins un dispositif d'entraînement qui leur est associé, et un dispositif de réglage (36) pouvant être commandé séparément et associé à l'un des tambours (6, 7),
**caractérisé en ce que**,
la lame de burin (1) est montée de façon à pouvoir s'appuyer élastiquement contre au moins un élément élastique (29, 30) avec une force de rappel que l'on peut déterminer et se projetant hors du cercle de coupe (40) en face de l'enclume ou de la zone d'enveloppe du tambour (7) faisant office d'enclume, dans le tambour à lame (6); la lame de burin (1) dans le tambour à lame est sous contrainte inélastique et le dispositif de réglage (36) recevant le tambour à lame avec son logement est monté de façon à pouvoir s'appuyer élastiquement contre l'élément élastique (29, 30) ayant une force de rappel que l'on peut prédéterminer,
**en ce que** le dispositif de réglage (36) est formé avec des pivots (25, 26) pouvant être actionnés par un excentrique de réglage (22, 23), le tambour à lame (6) avec son pivot (25) recevant le logement du dispositif de réglage (36) est monté de façon à pouvoir s"appuyer élastiquement contre une jambe de force à ressort (29) ayant une force de rappel que l'on peut prédéterminer.

2. Ciseau selon la revendication 1,
**caractérisé en ce que**,
l'un des tambours à lame (6) est équipé d'une lame de burin (2) et l'autre tambour (7) est équipé d'une enclume (24) agissant de concert avec la lame de burin (2).

3. Ciseau selon la revendication 1 ou 2,
**caractérisé en ce que**,
l'un des tambours (6) est équipé d'une lame de burin (2) qui agit de concert avec une zone d'enveloppe faisant office d'enclume du deuxième tambour (7).

4. Ciseau selon l'une ou plusieurs des revendications 1 à 3,
**caractérisé en ce que**,
les tambours (6, 7) peuvent être synchronisés par leur vitesse périphérique relative ainsi que par la vitesse d'avance de la bande, pour maintenir un intervalle de coupe défini entre la lame de burin (2) et l'enclume (24).

5. Ciseau selon l'une ou plusieurs des revendication 1 à 4,
**caractérisé en ce que**,
les dispositifs de réglage (22, 23, 36) peuvent être synchronisés ou commandés par la rotation des tambours (6, 7) de sorte que les mouvements de réglage sont terminés lors du passage de la lame (2) et/ou de l'enclume (24) et sont réinitialisés après le passage.

6. Ciseau selon la revendication 4 ou 5,
**caractérisé en ce que**,
la synchronisation se réalise de façon électrique ou électronique.

7. Ciseau selon la revendication 4 ou 5,
**caractérisé en ce que**,
la synchronisation se réalise par une technique à engrenage.
